Europäisches Patentamt

European Patent Office

Office européen des brevets

(19)

(11) **EP 0 744 824 B1**

(12) **EUROPÄISCHE PATENTSCHRIFT**

(45) Veröffentlichungstag und Bekanntmachung des Hinweises auf die Patenterteilung:
**11.08.1999 Patentblatt 1999/32**

(51) Int Cl.⁶: **H02P 7/622**

(21) Anmeldenummer: **96201411.4**

(22) Anmeldetag: **22.05.1996**

(54) **Schaltungsanordnung zum Speisen eines Zweiphasen-Asynchronmotors**

Two-phase asynchronous motor supply circuit

Circuit d'alimentation de moteur asynchrone biphasé

(84) Benannte Vertragsstaaten:
**AT DE FR GB IT NL**

(30) Priorität: **26.05.1995 DE 19519370**

(43) Veröffentlichungstag der Anmeldung:
**27.11.1996 Patentblatt 1996/48**

(73) Patentinhaber:
- **Philips Patentverwaltung GmbH**
  **22335 Hamburg (DE)**
  Benannte Vertragsstaaten:
  **DE**
- **Koninklijke Philips Electronics N.V.**
  **5621 BA Eindhoven (NL)**
  Benannte Vertragsstaaten:
  **FR GB IT NL AT**

(72) Erfinder:
- **van der Broeck, Heinz, Dr.**
  **22335 Hamburg (DE)**

- **Wendt, Matthias, Dr.**
  **22335 Hamburg (DE)**

(74) Vertreter: **Peters, Carl Heinrich, Dipl.-Ing. et al**
**Philips Patentverwaltung GmbH,**
**Röntgenstrasse 24**
**22335 Hamburg (DE)**

(56) Entgegenhaltungen:
**DE-A- 4 232 134**

- **HOLMES D G ET AL: "VARIABLE SPEED CONTROL OF SINGLE AND TWO PHASE INDUCTION MOTORS USING A THREE PHASE VOLTAGE SOURCE INVERTER" 3.Oktober 1993 , CONFERENCE RECORD OF THE INDUSTRY APPLICATIONS CONFERENCE IAS ANNUA MEETING, TORONTO, OCT. 3 - 6, 1993, VOL. PART 1, PAGE(S) 613 - 620 , INSTITUTE OF ELECTRICAL AND ELECTRONICS ENGINEERS XP000427482 * Seite 616, Absatz IV - Seite 617; Abbildungen 2,5 ***

**Beschreibung**

Die Erfindung bezieht sich auf eine Schaltungsanordnung zum Speisen eines Zweiphasen-Asynchronmotors mit zwei Wicklungen, die einerseits mit je einem ersten bzw. dritten und andererseits gemeinsam mit einem zweiten Anschlußpunkt verbunden sind, wobei den Anschlußpunkten je eine von drei in der Frequenz ihrer sinusförmigen Grundschwingungen (Grundfrequenz) wenigstens weitgehend übereinstimmenden Wechselspannungen zuführbar ist.

Eine derartige Schaltungsanordnung ist aus der DE-OS 42 32 134 bekannt. In dieser Schaltungsanordnung wird die Verlustleistung in einem mit dem dritten Anschlußpunkt verbundenen Schaltkreis zum Erreichen einer sparsameren Dimensionierung ohne Einschränkung der Betriebstauglichkeit, insbesondere der Belastbarkeit dadurch verringert, daß die dem zweiten Anschlußpunkt zuzuführende Wechselspannung in vorgebbaren, periodisch wiederkehrenden Zeitintervallen konstante Pegel annimmt.

Aus der US-PS 5,136,216 ist ein Antriebssystem zum Antreiben eines konventionellen Einphasen-"PSC"-Motors aus einer zweiphasigen Energiequelle bekannt. Dieser Motor weist zwei Wicklungen auf, die ebenfalls einerseits mit je einem und andererseits gemeinsam mit einem weiteren Anschlußpunkt verbunden sind. Diesen Anschlußpunkten werden gemäß einer Sinusfunktion impulsdauermodulierte Rechtecksignale zugeführt. Der Motor kann aus einem Dreiphasen-Inverter, der eine zweiphasige Wechselspannung erzeugt, aus einer einphasigen Quelle mit Anlaufkondensator oder aus einem Zweiphasen-Inverter gespeist werden.

Die Erfindung hat die Aufgabe, eine Schaltungsanordnung der eingangs genannten Art derart weiterzubilden, daß eine noch bedeutendere Verringerung der Verlustleistungen in möglichst allen mit den Anschlußpunkten verbundenen Schaltkreisen erzielt wird.

Diese Aufgabe wird erfindungsgemäß bei einer Schaltungsanordnung gemäß dem Oberbegriff des Hauptanspruchs dadurch gelöst, daß

- die dem zweiten Anschlußpunkt zuzuführende zweite Wechselspannungen einen mit der Grundfrequenz rechteckförmigen Verlauf aufweist,
- die dem ersten bzw. dritten Anschlußpunkt zuzuführende erste bzw. dritte Wechselspannung bezüglich der Phasen ihrer sinusförmigen Grundschwingungen der zweiten Wechselspannung vor- bzw. nacheilend derart ausgebildet sind, daß daraus an den Wicklungen resultierende Spannungen untereinander einen Phasenwinkel einschließen, der dem (mechanischen) Winkel zwischen den Wicklungen entspricht,
- die erste und die dritte Wechselspannung je aus Zeitabschnitten konstanter (unmodulierter) Spannungswerte und dazu zeitlich symmetrisch angeordneten Zeitabschnitten bestehen, in denen die Spannung mit vorbestimmtem Tastgrad und einer Schaltfrequenz, die groß ist gegenüber der Grundfrequenz, impulsmoduliert ist, wobei

- in jedem Zeitabschnitt nur jeweils die erste oder die dritte Wechselspannung impulsmoduliert und die jeweils andere (dritte bzw. erste) Wechselspannung konstant (unmoduliert) ist und die Dauer der Zeitabschnitte impulsmodulierter Spannung sowie der Tastgrad in jedem dieser Zeitabschnitte gemäß einem einzustellenden Amplitudenverhältnis zwischen den Spannungen an den Wicklungen bestimmt sind.

Dabei ist als Tastgrad das Verhältnis der Dauer des Anliegens einer positiven Spannung innerhalb einer Periode der Schaltfrequenz zur gesamten Dauer dieser Periode der Schaltfrequenz definiert.

Durch die erfindungsgemäße Schaltungsanordnung wird eine gegenüber dem Stand der Technik bedeutende Verringerung der Zahl der Schaltflanken der den Anschlußpunkten zuzuführenden Wechselspannungen möglich. Da mit jeder Schaltflanke, d.h. mit jedem Schaltvorgang in dieser Wechselspannung, Verluste in diese Schaltvorgänge bewirkenden Schaltkreisen verbunden sind, bedeutet eine Verringerung der Anzahl der Schaltvorgänge in jeder Periode der Grundschwingung auch eine Verringerung der Verlustleistung. Durch die erfindungsgemäß erzielte Verringerung der termischen Belastung wird eine einfachere, kostengünstigere Dimensionierung der Schaltungsanordnung, insbesondere der genannten Schaltkreise, ermöglicht. Dabei sind die benötigten, zeitlichen Verläufe der Wechselspannungen an den Anschlußpunkten mit einfachen Mitteln erzeugbar. Durch entsprechende Dimensionierung der Dauer der Zeitabschnitte konstanter bzw. impulsmodulierter Spannung bzw. gleichbedeutend Spannungswerte und des Tastgrades können Phasenlagen und Amplituden der Spannungen an den Wicklungen leicht an die Konstruktionsmerkmale unterschiedlicher zu speisender Motoren angepaßt werden. Es lassen sich in einfacher Weise sowohl Motoren mit gleichen als auch solche mit unterschiedlichen Wicklungen speisen.

Vorzugsweise sind in je zwei zeitlich symmetrisch angeordneten Zeitabschnitten impulsmodulierter Spannung der ersten oder der dritten Wechselspannung die Tastgrade zueinander komplementär zu 1 gewählt. Die Summe derartig komplementärer Tastgrade beträgt dabei 1.

Diese Werte des Tastgrades lassen sich durch Inventierung eines rechteckförmigen Signals, welches einen der gewünschten Tastgrade aufweist, einfach erzeugen. In den einzelnen Zeitabschnitten impulsmodulierter Spannung kann dabei vorzugsweise der Tastgrad konstant sein. Mit einer sehr einfachen Impulsweitenmodulation können dann gute Annäherungen an sinusförmige Verläufe der Spannungen an den Wicklungen mit tolerierbaren Oberwellenanteilen erzielt werden, wobei für den speziellen Fall, immer Grundschwingen entstehen, die 90° Phasenverschiebung aufweisen.

In einer bevorzugten Ausgestaltung der erfindungsgemäßen Schaltungsanordnung bilden die Zeitabschnitte konstanter und diejenigen impulsmodulierter Spannung ein Zeitraster mit einer Frequenz (Basispulsfolgefrequenz), die ein ganzzahliges Vielfaches der Grundfrequenz darstellt, wobei die Wechselspannungen aus einer logischen Verknüpfung einer Schwingung mit dieser Basispulsfolgefrequenz und einem Schaltsignal abgeleitet werden, welches in vorerwähnter Weise die Schaltfrequenz und einen einzustellenden Tastgrad aufweist. Die Schwingung mit der Basispulsfolgefrequenz kann dann vorteilhaft die Drehgeschwindigkeit des Motors bestimmen und auch in einfacher Weise in eine drehwinkelgesteuerte, elektronische Kommutierung einbezogen sein. Die Schaltfrequenz ist dagegen vorzugsweise unabhängig vom Betriebszustand des zu speisenden Motors konstant.

Weitere vorteilhafte Ausgestaltungen ergeben sich aus den Unteransprüchen.

Einige Ausführungsbeispiele der Erfindung sind in der Zeichnung dargestellt und werden im nachfolgenden näher beschrieben. Es zeigen:

Fig. 1 ein schematisches Schaltbild für eine Schaltungsanordnung zum Speisen eines Motors mit zwei Wicklungen aus einem dreiphasigen Wechselrichter,

Fig. 2 einige Signalverläufe für ein Beispiel einer Speisung eines Motors mit symmetrischen Wicklungen und

Fig. 3 vergleichbare Signalverläufe eines Beispiels für die Speisung eines Motors mit unsymmetrischen Wicklungen.

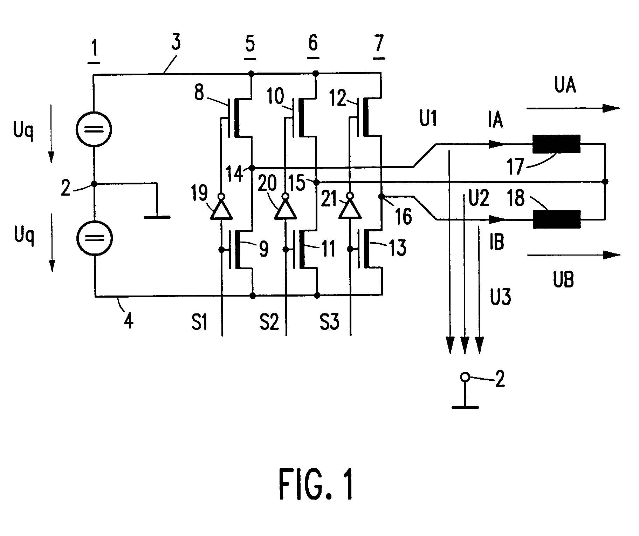

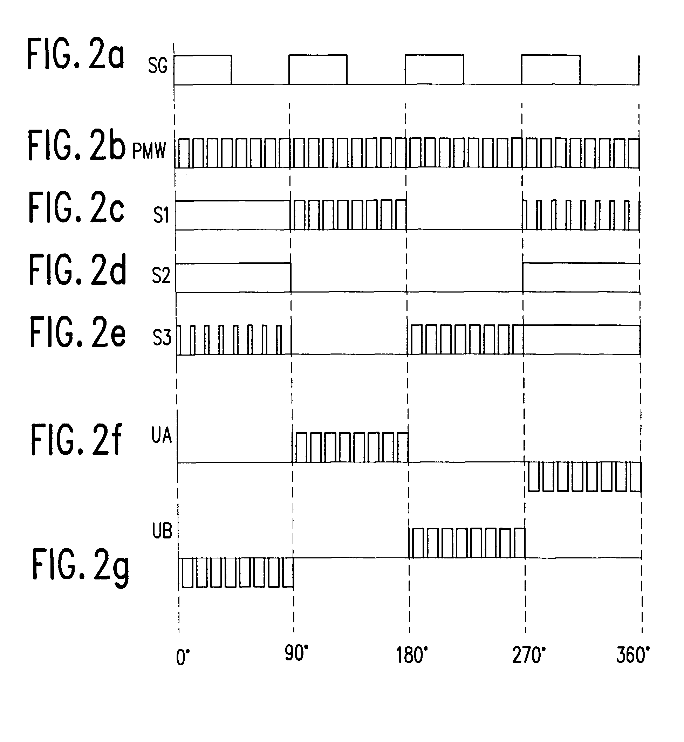

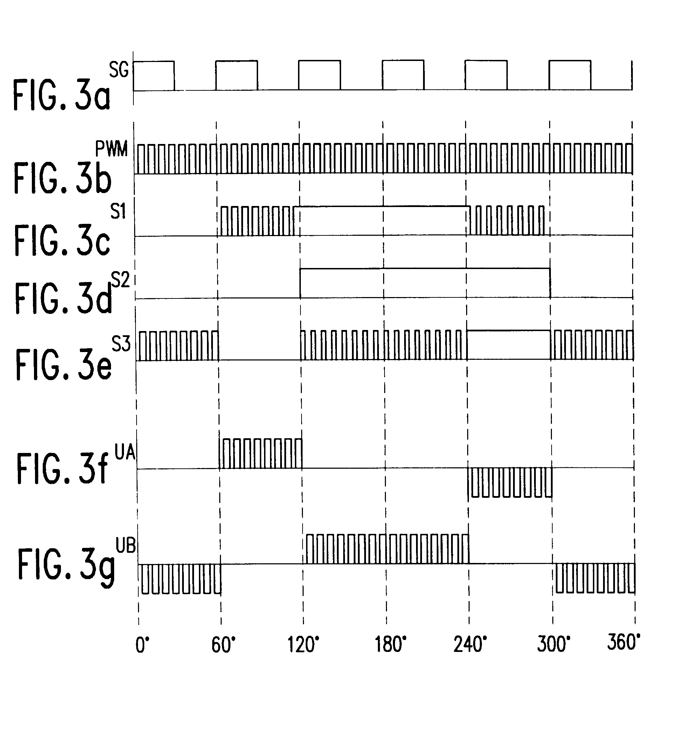

Fig. 1 zeigt schematisch ein Schaltbild für eine Schaltungsanordnung, mit der in vorteilhafter Weise die Speisung eines Zweiphasen-Asynchronmotors gemäß den Diagrammen nach den Fig. 2 und 3 vorgenommen werden kann. Diese Schaltungsanordnung umfaßt eine Gleichspannungsquelle 1, die in Fig. 1 der Einfachheit halber als Reihenschaltung zweier je eine Gleichspannung Uq abgebender Quellen dargestellt ist, deren Verbindungspunkt mit Masse 2 gekoppelt ist. An ihren Polen 3 bzw. 4 gibt die Gleichspannungsquelle 1 bezogen auf das Massepotential (Potential an Masse 2) eine positive Spannung Uq bzw. eine negative Spannung -Uq ab. Die Gleichspannungsquelle 1 kann mit einem Netzgleichrichter, einem Schaltnetzteil, einer Batterie oder dergleichen ausgestaltet sein.

Mit den Polen 3, 4 der Gleichspannungsquelle 1 sind Endpunkte dreier Schalterstrecken 5, 6 bzw. 7 verbunden, die aus je zwei in Reihe angeordneten Schalterstufen 8, 9; 10, 11 bzw. 12, 13 bestehen. Jede der Schalterstufen 8 bis 13 ist im Ausführungsbeispiel nach Fig. 1 aus einem Feldeffekttransistor aufgebaut, dessen Source-Drain-Strecke einen Strompfad für dem Zweiphasen-Asynchronmotor zuzuführende Ströme bildet. Dazu ist in jeder der Schalterstrecken 5, 6 bzw. 7 der Drain-Anschluß des Feldeffekttransistors der ersten Schalterstufen 8, 10 bzw. 12 mit dem positiven Pol 3 der Gleichspannungsquelle 1 und der Source-Anschluß der zweiten Schalterstufen 9, 11 bzw. 13 mit dem negativen Pol 4 der Gleichspannungsquelle 1 verbunden. In jeder der Schalterstrecken 5, 6 bzw. 7 sind außerdem der Source-Anschluß des Feldeffekttransistors der ersten Schalterstufe 8, 10 bzw. 12 mit dem Drain-Anschluß der zugehörigen zweiten Schalterstufe 9, 11 bzw. 13 verbunden. Die letztgenannte Verbindung bildet einen ersten, zweiten bzw. dritten Anschlußpunkt 14, 15 bzw. 16. Zwischen dem ersten Anschlußpunkt 14 und dem zweiten Anschlußpunkt 15 ist eine erste Wicklung 17, zwischen dem zweiten Anschlußpunkt 15 und dem dritten Anschlußpunkt 16 ist eine zweite Wicklung 18 des Zweiphasen-Asynchronmotors angeschlossen. Dabei kann die erste Wicklung 17 eine Hauptwicklung und die zweite Wicklung 18 eine Hilfswicklung darstellen oder umgekehrt; beide Wicklungen können jedoch auch gleich dimensioniert sein.

Den Schalterstrecken 5, 6 bzw. 7, die Teile der vorerwähnten Schaltkreise sind, obliegt die Aufgabe, den Anschlußpunkten 14, 15 bzw. 16 drei Wechselspannungen U1, U2, U3 zuzuführen. In Fig. 1 sind diese Spannungen gegen Masse 2 eingezeichnet. Die Differenz aus der ersten Wechselspannung U1 am ersten Anschlußpunkt 14 und der zweiten Wechselspannung U2 am zweiten Anschlußpunkt 15 bildet eine Spannungen UA an der ersten Wicklung 17 und die Differenz aus der dritten Wechselspannung U3 am dritten Anschlußpunkt 16 und der zweiten Wechselspannung U2 am zweiten Anschlußpunkt 15 eine Spannung UB an der zweiten Wicklung 18. Die Wicklungen 17 bzw. 18 werden im Betrieb von Strömen IA bzw. IB durchflossen.

Die Gate-Anschlüsse der ersten und zweiten Schalterstufen 8 und 9 bzw. 10 und 11 bzw. 12 und 13 der Schalterstrecken 5, 6 bzw. 7 sind untereinander über je einen Inverter 19, 20 bzw. 21 verbunden. Den Gate-Anschlüssen der zweiten Schalterstufen 9, 11, 13 sind im Betrieb Steuersignale S1, S2 bzw. S3 zuführbar. Durch sie werden jeweils die erste und die zweite Schalterstufe 8 bzw. 9; 10 bzw. 11; 12 bzw. 13 gegenläufig angesteuert, so daß die Anschlußpunkte 14, 15 bzw. 16 wahlweise mit dem ersten Pol 3 oder mit dem zweiten Pol 4 der Gleichspannungsquelle 1 verbindbar sind. Durch entsprechende Steuerung mit den Steuersignalen S1, S2 bzw. S3 werden dabei unterschiedliche, zeitliche Verläufe für die Wechselspannungen U1 bis U3 erzeugt.

Das Diagramm nach Fig. 2 zeigt zeitliche Verläufe einiger Signale in einer Schaltungsanordnung gemäß Fig. 1 nach einem ersten Betriebsbeispiel. Dabei sind die Wicklungen 17 und 18 identisch dimensioniert und zueinander um 90° verschoben angeordnet. Entsprechend werden sie mit um 90° bezüglich ihrer Grundschwingung versetzten Spannungen UA und UB gespeist. Die Signale sind im einzelnen in Fig. 2 über einer Periode dieser Grundschwingung aufgetragen.

Fig. 2a) zeigt eine Schwingung, die eine Frequenz entsprechend dem Vierfachen der Grundfrequenz aufweist und einen rechteckförmigen Verlauf annimmt. Die Frequenz dieser mit dem Bezugszeichen SG bezeichneten Schwingung wird als Basispulsfolgefrequenz bezeichnet; die Schwingung SG kann entsprechend als Basispulsfolge benannt werden.

Fig. 2b) zeigt schematisch ein Schaltsignal, das als rechteckförmige Schwingung mit der Schaltfrequenz und einem vorgegebenen Tastgrad dargestellt ist. Während die Basispulsfolgefrequenz unmittelbar die Drehzahl des Motors vorgibt, ist die Schaltfrequenz des Schaltsignals PWM in allen Betriebsfällen des Motors konstant und groß gegenüber der Basispulsfolgefrequenz. Aus der Basispulsfolge SG und dem Schaltsignal PWM werden durch logische Verknüpfung die in Fig. 2c) bis 2e) dargestellten Steuersignale S1 bis S3 gewonnen. Dabei verändert jedes der Steuersignale S1 bis S3 mit einer ansteigenden Schaltflanke der Basispulsfolge SG seinen Zustand bzw. seine Wellenform. So nimmt beispielsweise das erste Steuersignal S1 zwischen den ersten beiden ansteigenden Flanken der Basispulsfolge SG im ersten Zeitintervall entsprechend einer Motorphase zwischen 0° und 90° einen hohen Wert an. Im zweiten Zeitabschnitt entsprechend einem Bereich der Motorphase zwischen 90° und 180° ist das erste Steuersignal S1 entsprechend dem Schaltsignal PWM impulsmoduliert, um im dritten Zeitabschnitt einen konstanten, unmodulierten, niedrigen Pegel anzunehmen. Dagegen ist es im vierten Zeitabschnitt entsprechend einer Motorphase von 270° bis 360° wiederum impulsmoduliert, wobei der Tastgrad dieser Impulsmodulation im letztgenannten Zeitabschnitt zu dem Tastgrad im zweiten Zeitabschnitt (zwischen 90° und 180°) komplementär zu 1 ist. Diese beiden Zeitabschnitte mit impulsmoduliertem Signalverlauf des ersten Steuersignals S1 sind zeitlich symmetrisch zum ersten Zeitabschnitt (zwischen 0° und 90°) angeordnet, in dem das erste Steuersignal S1 einen konstanten, hohen Pegel annimmt. Dies wird deutlich, wenn die Signalverläufe über die gezeigte Periode der Grundschwingung hinaus verlängert dargestellt werden.

Einen entsprechenden zeitlichen Verlauf weist auch das dritte Steuersignal S3 auf. Allerdings eilt es dem ersten Steuersignal S1 um 90° in der Phase vor, bezogen auf die Grundfrequenz. Das zweite Steuersignal weist dagegen lediglich einen mit der Grundfrequenz rechteckförmigen Verlauf auf, dessen Phase mittig bezüglich der Phasen der Grundschwingungen des ersten und des dritten Steuersignals S1 und S3 liegt.

Durch die Steuersignale S1 bis S3 werden Wechselspannungen U1 bis U3 erzeugt, die in Fig. 2 nicht explizit dargestellt sind, deren zeitliche Verläufe jedoch unmittelbar denjenigen der Steuersignale S1 bis S3 entsprechen. Aus diesen Wechselspannungen U1 bis U3 resultieren an den Wicklungen 17, 18 des Motors Spannungen UA und UB, deren zeitliche Verläufe in Fig. 2f) und 2g) dargestellt sind. Die zeitlichen Verläufe der Spannungen UA und UB gleichen einander mit einer Phasenverschiebung bezüglich der Grundfrequenz von 90°. Durch die beschriebene, komplementäre Festlegung des Tastgrades in den einzelnen Zeitabschnitten ergeben sich identische Tastgrade in den Spannungen UA und UB für alle Zeitabschnitte.

An Fig. 2 ist zu erkennen, daß das zweite Steuersignal S2 in jeder Periode der Grundfrequenz nur zwei Schaltvorgänge ausführt und daß nur jeweils eines der übrigen Steuersignale S1 und S3 zu jedem Zeitpunkt (bzw. in jedem Zeitabschnitt) impulsmoduliert ist. Gegenüber dem Stand der Technik wird somit die Anzahl der Schaltvorgänge je Periode der Grundfrequenz drastisch reduziert und damit die Verlustleistung an den Schalterstrecken 5, 6 bzw. 7 stark vermindert. Trotzdem ist eine uneingeschränkte Leistungssteuerung zwischen Null- und Voll-Last durch Wahl des Tastgrades möglich.

Fig. 3 zeigt in einer der Fig. 2 entsprechenden Darstellung ein Diagramm für den Betrieb eines Motors mit unsymmetrischen Wicklungen 17, 18. Bei diesem Ausführungsbeispiel stellt die Basispulsfolgefrequenz ein Sechsfaches der Grundfrequenz dar; entsprechend weist die Basispulsfolge SG gemäß Fig. 3a) innerhalb der in Fig. 3 dargestellten Periode der Grundfrequenz sechs Rechteckimpulse auf. Das Amplitudenverhältnis zwischen den Spannungen UA und UB an den unsymmetrischen Wicklungen 17 und 18 beträgt jetzt beispielhaft:

$$1 : \sqrt{3} \ .$$

Die Steuersignale 1 bis 3 haben im Prinzip die gleichen Merkmale wie diejenigen des Betriebsfalles nach Fig. 2, d.h. dieselbe symmetrische Anordnung impulsmodulierter und unmodulierter Zeitabschnitte. Die Phase der Grundschwingung des ersten Steuersignals S1 eilt der Phase der Grundschwingung des zweiten Steuersignals S2 um 30° vor, die Phase der Grundschwingung des dritten Steuersignals S3 eilt ihr um 60° nach. Insgesamt wird so wieder eine Phase von 90° bezüglich der Grundschwingung zwischen den Steuersignalen S1 und S3 gebildet, die auch in den Grundschwingungen der Spannungen UA und UB an den Wicklungen 17 bzw. 18 auftritt. Die Gesamtdauer der Zeitabschnitte, in denen die Spannung UB an der zweiten Wicklung 18 einen von Null verschiedenen Spannungswert annimmt, ist entsprechend dem einzustellenden Spannungsverhältnis größer als die Gesamtdauer der vergleichbaren Zeitabschnitte der Spannung UA an der ersten Wicklung 17.

**Patentansprüche**

1. Schaltungsanordnung zum Speisen eines Zweiphasen-Asynchronmotors mit zwei Wicklungen (17, 18), die einerseits mit je einem ersten (14) bzw. dritten (16) und andererseits gemeinsam mit einem zweiten Anschlußpunkt (15) verbunden Anschlußpunkten sind, wobei den je eine von drei in der Frequenz ihrer sinusförmigen Grundschwingungen (Grundfrequenz) wenigstens weitgehend übereinstimmenden Wechselspannungen (U1, U2, U3) zuführbar ist, dadurch gekennzeichnet, daß

- die dem zweiten Anschlußpunkt zuzuführende zweite Wechselspannungen (U2) einen mit der Grundfrequenz rechteckförmigen Verlauf aufweist,
- die dem ersten bzw. dritten Anschlußpunkt zuzuführende erste bzw. dritte Wechselspannung (U1 bzw. U3) bezüglich der Phasen ihrer sinusförmigen Grundschwingungen der zweiten Wechselspannung (U2) vor- bzw. nacheilend derart ausgebildet sind, daß daraus an den Wicklungen resultierende Spannungen (UA, UB) untereinander einen Phasenwinkel einschließen, der dem (mechanischen) Winkel zwischen den Wicklungen entspricht,
- die erste und die dritte Wechselspannung (U1, U3) je aus Zeitabschnitten konstanter unmodulierter Spannungswerte und dazu zeitlich sym-metrisch angeordneten Zeitabschnitten beste-hen, in denen die Spannung mit vorbestimmtem Tastgrad und einer Schaltfrequenz, die groß ist gegenüber der Grundfrequenz, impulsmoduliert ist, wobei
- in jedem Zeitabschnitt nur jeweils die erste oder die dritte Wechselspannung (U1 oder U3) impulsmoduliert und die jeweils andere (dritte bzw. erste) Wechselspannung (U3 bzw. U1) konstant unmoduliert ist und die Dauer der Zeitabschnitte impulsmodulierter Spannung sowie der Tastgrad in jedem dieser Zeitabschnitte ge-mäß einem einzustellenden Amplitudenver-hältnis zwischen den Spannungen (UA, UB) an den Wicklungen bestimmt sind.

2. Schaltungsanordnung nach Anspruch 1, dadurch gekennzeichnet,
daß in je zwei zeitlich symmetrisch angeordneten Zeitabschnitten impulsmodulierter Spannung der ersten oder der dritten Wechselspannung (U1 oder U3) die Tastgrade zueinander komplementär zu 1 gewählt sind.

3. Schaltungsanordnung nach Anspruch 1 oder 2, dadurch gekennzeichnet,
daß die Zeitabschnitte konstanter und diejenigen impulsmodulierter Spannung ein Zeitraster mit einer Basispulsfolgefrequenz bilden, die ein ganzzahliges Vielfaches der Grundfrequenz darstellt, und daß die Wechselspannungen (U1, U2, U3) aus einer logischen Verknüpfung einer Schwingung mit dieser Basispulsfolgefrequenz und einem Schaltsignal mit der Schaltfrequenz und dem einzustellenden Tastgrad abgeleitet werden.

4. Schaltungsanordnung nach Anspruch 3, dadurch gekennzeichnet,
daß die Basispulsfolgefrequenz ein Vierfaches der Grundfrequenz darstellt und das Amplitudenverhältnis zwischen den Spannungen (UA, UB) an den Wicklungen 1:1 beträgt.

5. Schaltungsanordnung nach Anspruch 3, dadurch gekennzeichnet,
daß die Basispulsfolgefrequenz ein Sechsfaches der Grundfrequenz darstellt und das Amplitudenverhältnis zwischen den Spannungen (UA, UB) an den Wicklungen

$$1: \sqrt{3}$$

beträgt.

**Patentansprüche**

1. A circuit arrangement for powering a two-phase asynchronous motor comprising two windings (17, 18) which each have one end connected to a first (14) and a third (16) node, respectively, and which both have another end connected to a second node (15), the nodes each being arranged to receive one of three alternating voltages (U1, U2, U3) whose sinusoidal fundamental waves at least substantially correspond in frequency (fundamental frequency), characterized in that

- the second alternating voltages (U2) to be applied to the second node has a rectangular waveform of fundamental frequency,
- the first and the third alternating voltage (U1 and U3, respectively) to be applied to the first and the third node, respectively, are given such a lead and such a lag as regards the phases of their sinusoidal fundamental waves that the resulting voltages (UA, UB) across the windings have a phase angle relative to one another which corresponds to the (mechanical) angle between the windings,
- the first and the third alternating voltage (U1, U3) each comprise time intervals with constant non-modulated voltage values and time intervals which are positioned symmetrically in time relative thereto and in which the voltage is pulse modulated with a given duty cycle and with a switching frequency which is high relative to the fundamental frequency,

- only the first or the third alternating voltage (U1 or U3) in each time interval being pulse modulated and the respective other (third or first) alternating voltage (U3 or U1) being constant, non-modulated, and the duration of the time intervals with a pulse modulated voltage as well as the duty cycle in each of these time intervals being determined in accordance with a desired amplitude ratio between the voltages (UA, UB) across the windings.

2. A circuit arrangement as claimed in Claim 1, characterized in that the duty cycles in every two symmetrically positioned time intervals of the first or the third alternating voltage (U1 or U3) in which the voltage is pulse modulated are selected to be one another's complement of 1.

3. A circuit arrangement as claimed in Claim 1 or 2, characterized in that the time intervals with a constant voltage and those with a pulse modulated voltage form a time pattern with a basic pulse train frequency, which is an integral multiple of the fundamental frequency, and the alternating voltages (U1, U2), U3) are derived from a logic combination of a signal having said basic pulse train frequency and a switching signal having the switching frequency and having the desired duty cycle.

4. A circuit arrangement as claimed in Claim 3, characterized in that the basic pulse train frequency is a multiple of the fundamental frequency and the amplitude ratio between the voltages (UA, UB) across the windings is 1:1.

5. A circuit arrangement as claimed in Claim 3, characterized in that the basic pulse train frequency is six times the fundamental frequency and the amplitude ratio between the voltages (UA, UB) across the windings is $1\sqrt{3}$.

**Claims**

1. Circuit d'alimentation d'un moteur asynchrone biphasé avec deux enroulements (17, 18) qui, d'une part, sont reliés respectivement à un premier (14) ou troisième (16) point de raccordement et, d'autre part, ensemble à un deuxième point de raccordement (15), l'une des trois tensions alternatives (U1, U2, U3) qui concordent, du moins en grande partie, dans la fréquence de leurs composantes fondamentales sinusoïdales (fréquence de base) pouvant être amenée aux points de raccordement, caractérisé en ce que:

- la deuxième tension alternative à amener au deuxième point de raccordement (U2) présente un tracé rectangulaire avec la fréquence de base,
- les première ou troisième tensions alternatives (U1, U3) à amener au premier ou deuxième point de raccordement sont conçues sur le plan des phases de leurs composantes fondamentales sinusoïdales avec une avance ou un retard sur la deuxième tension alternative (U2) de telle sorte que les tensions (U1, UB) en résultant sur les enroulements forment entre elles un angle de phase qui correspond à l'angle mécanique (entre les enroulements)
- les première et troisième tensions alternatives (U1, U3) se composent respectivement de segments temporels de valeurs de tension constantes (non modulées) et de segments temporels disposés symétriquement dans le temps dans lesquels la tension subit une modulation d'impulsion avec un degré de balayage préalablement déterminé et une fréquence de commutation élevée par rapport à la fréquence fondamentale,
- seules les premiere ou troisième tension alternatives (U1 ou U3) faisant l'objet d'une modulation d'impulsion à chaque segment temporel et l'autre (la troisième ou la première) tension alternative respective (U3 ou U1) sont constanteq et non moduléeq et la durée des segments temporels de tension à modulation d'impulsion ainsi que le degré de balayage dans chacun de ces segments temporels sont déterminés conformément à un rapport d'amplitude à determiner entre les tensions (UA, UB) aux enroulements.

2. Circuit selon la revendication 1, caractérisé en ce que les valeurs des premiere ou troisième tensions alternatives (U1 ou U3) à modulation d'impulsion dans deux segments temporels disposés symétriquement dans le temps sont choisies pour être complémentaire en formant 1.

3. Circuit selon l'une des revendications 1 ou 2, caractérisé en ce que les segments temporels de tension constante et à modulation d'impulsion forment une trame temporelle avec une fréquence de séquence d'impulsion de base qui représente un multiple entier de la fréquence fondamentale et que les tensions alternatives (U1, U2, U3) sont dérivées d'une liaison logique d'une oscillation à cette fréquence de séquence d'impulsion de base et un signal de commutation à la fréquence de commutation et au degré de balayage à régler.

4. Circuit selon la revendication 3, <u>caractérisé en ce</u> que la fréquence de séquence d'impulsion de base représente quatre fois la fréquence fondamentale et que le rapport d'amplitude entre les tensions (UA, UB) s'élève à 1 :1 aux enroulements.

5. Circuit selon la revendication 3, <u>caractérisé en ce</u> que la fréquence de séquence d'impulsion de base représente six fois la fréquence fondamentale et le rapport d'amplitude entre les tensions (UA, UB) aux enroulements s'élève à 1 : $\sqrt{3}$.

**FIG. 1**

FIG. 2a SG

FIG. 2b PMW

FIG. 2c S1

FIG. 2d S2

FIG. 2e S3

FIG. 2f UA

UB
FIG. 2g

0°    90°    180°    270°    360°

FIG. 3a $^{SG}$

FIG. 3b $^{PWM}$

FIG. 3c $^{S1}$

FIG. 3d $^{S2}$

FIG. 3e $^{S3}$

FIG. 3f $^{UA}$

FIG. 3g $^{UB}$

0°  60°  120°  180°  240°  300°  360°